# FASCICULE DE BREVET EUROPEEN

(11) **EP 1 849 205 B1**
(45) Date de publication et mention de la délivrance du brevet: **07.03.2018**
(21) Numéro de dépôt: 06709130.6
(22) Date de dépôt: 19.01.2006
(51) Int. Cl.: H01M 10/056, H01M 10/0525, H01M 6/18

(54) **ELECTROLYTE BICOUCHE POUR BATTERIE AU LITHIUM**
ZWEISCHICHT-ELEKTROLYT FÜR EINE LITHIUMBATTERIE
BILAYER ELECTROLYTE FOR A LITHIUM BATTERY

(30) Priorité: 24.01.2005 FR 0500715
(43) Date de publication de la demande: 31.10.2007
(73) Titulaire: Blue Solutions, 29500 Ergué Gabéric (FR)
(72) Inventeur: DESCHAMPS, Marc, F-29000 Quimper (FR)
(74) Mandataire: Goulard, Sophie
(86) Numéro de dépôt international: PCT/FR2006/000125
(87) Numéro de publication internationale: WO 2006/077325

(56) Documents cités:
- WO-A-98/37589
- WO-A-02/061872
- WO-A1-01/84659
- FR-A- 2 841 045
- US-A- 5 716 421
- US-A- 5 925 483
- US-B1- 6 645 675
- DATABASE WPI Section EI, Week 200339 Derwent Publications Ltd., London, GB; Class X16, AN 2002-357486 XP002345637 & KR 368 438 B (INST ADVANCED ENG) 24 janvier 2003 (2003-01-24)

## Description

La présente invention concerne une batterie au lithium améliorée.

Les batteries au lithium fonctionnent par échange d'ions lithium entre une anode et une cathode, à travers un électrolyte **qui** comprend un sel de lithium en solution dans un solvant liquide ou dans un solvant polymère. Dans un mode de réalisation particulier, l'électrolyte est une solution solide d'un sel dans un solvant, et les divers éléments de la batterie sont sous forme de films. Le film constituant l'électrode positive est appliqué sur un collecteur de courant, le film constituant l'électrolyte est entre les deux films constituant respectivement l'électrode positive et l'électrode négative. Un polymère peut être utilisé comme solvant du sel s'il est capable de solvater les cations du sel. Les polymères constitués essentiellement par des unités oxyde d'éthylène (POE) ont été largement utilisés comme solvant du sel.

Cependant, la tenue mécanique conférée par un POE au film d'électrolyte est faible, notamment dans le domaine de température dans lequel fonctionne la batterie. En outre, lors des cycles successifs de fonctionnement de la batterie, le lithium a tendance à former des dendrites, ce qui réduit fortement la durée de vie de la batterie. EP-1 139 128 décrit une batterie dont la configuration vise à supprimer le problème créé par la formation de dendrites. Ladite batterie comprend comme électrolyte un film d'un polymère conducteur ionique placé entre l'anode et la cathode. Le film de polymère conducteur ionique est constitué par une matrice dudit polymère qui retient une solution non aqueuse contenant un sel de lithium, ladite matrice étant formée par deux couches formées sur l'une l'anode et l'autre sur la cathode. La concentration en sel de lithium est plus élevée dans la matrice polymère du côté de la cathode que du côté de l'anode. Par exemple, la couche de polymère conducteur du côté de l'anode est constituée par un mélange de POE trifonctionnel portant trois groupements terminaux acrylate et d'une solution de LiPF₆ dans un mélange EC/EMC dissous dans DPMA et coulé sur l'anode puis réticulé par irradiation, et la couche de polymère conducteur du côté de la cathode est constituée par un mélange du même POE trifonctionnel et d'une solution de LiPF₆ dans un mélange EC/γ-butyrolactone dissous dans DPMA et coulé sur la cathode, puis réticulé par irradiation. Cependant, la présence du liquide non aqueux dans la polymère conducteur tend à former des mousses, ce qui inactive une partie du lithium, et rend donc nécessaire l'utilisation d'un excès de lithium.

US-5,925,483 décrit un électrolyte sous forme de film constitué par deux couches, et son utilisation dans une batterie dont une électrode est un métal alcalin. La 1^{ère} couche est du type polymère à conduction ionique, et elle est en contact avec l'anode. La 2^{ème} couche (également du type polymère à conduction ionique) est en contact avec la 1^{ère} couche et avec la cathode, ladite 2^{ème} couche contenant au moins un liquide aprotique et au moins un sel de métal alcalin, qui diffusent dans la 1^{ère} couche pour l'activer. Dans tous les exemples, la 2^{ème} couche contient effectivement un liquide aprotique. Or la présence du liquide aprotique qui diffuse dans la 1^{ère} couche provoque une mise en contact dudit liquide avec l'anode de métal alcalin, ce qui a pour effet de provoquer la formation d'une mousse de métal alcalin, au détriment de la durée de vie de la batterie qui contient le bi-couche en tant qu'électrolyte. WO 01846559 décrit un générateur électrochimique tout solide comprenant un électrolyte polymérique formé d'un polyéther dans lequel est dissout un sel de lithium et d'un ou plusieurs polymères fluorés.

Le but de la présente invention est de fournir une batterie au lithium dans laquelle la formation de dendrites lors des cyclages successifs, est diminuée, voire supprimée, tout en diminuant l'excès de lithium nécessaire.

La présente invention, définie selon les revendications, a par conséquent pour objet un film de matériau composite destiné à former l'électrolyte d'une batterie au lithium, ainsi qu'une batterie au lithium comprenant un tel électrolyte.

Le film de matériau composite selon la présente invention comprend une couche dite couche N et une couche dite couche P, et il est caractérisé en ce que:
- chacune des couches P et N est constituée par une solution solide d'un sel de lithium dans un matériau polymère, le sel de lithium étant le même dans les deux couches, la teneur en matériau polymère étant d'au moins 60% en poids, et la teneur en sel de lithium étant de 5 à 25% en poids ;
- le matériau polymère de la couche P contient un polymère solvatant et un polymère non solvatant, le rapport en poids des deux polymères étant tel que le polymère solvatant forme un réseau continu ;
- le matériau polymère de la couche N est constitué par un polymère solvatant, et éventuellement un polymère non solvatant, le rapport en poids des deux polymères étant tel que le polymère solvatant forme un réseau continu, et le polymère non solvatant ne forme pas un réseau continu.

Le fait que le polymère solvatant forme un réseau continu au sein de chacune des couches P et N signifie que, dans chacune des couches, ledit polymère solvatant constitue une matrice au sein de laquelle les autres constituants de la couche sont dissous ou dispersés. Dans une telle structure, la circulation des ions lithium à travers le film composite se fait par l'intermédiaire du polymère solvatant.

Dans un mode de réalisation préféré, la couche P est telle que le polymère solvatant et le polymère non solvatant forment un réseau co-continu. Dans un tel cas, les deux polymères forment ensemble la matrice du matériau constituant la couche P.

Il est avantageux que le polymère solvatant de la couche P soit le même que celui de la couche N. De même, lorsque la couche N comprend un polymère non solvatant, il est avantageux que ledit polymère non solvatant soit identique au polymère non solvatant de la couche P.

Le polymère solvatant est choisi parmi les poly(oxyde d'éthylène). Le polymère non solvatant est choisi parmi les poly(fluorure de vinylidène) et les copolymères de fluorure de vinylidène et de hexafluoropropylène.

Lorsque le matériau formant une couche donnée comprend un polymère solvatant et un polymère non solvatant, la formation d'un réseau continu ou co-continu dépend notamment de la nature des polymères choisis et de leurs proportions respectives. Par exemple, lorsque le matériau polymère d'une couche comprend un poly(oxyde d'éthylène) POE comme polymère solvatant et un poly(fluorure de vinylidène) PVDF comme polymère non solvatant, on obtient un réseau continu de PEO lorsque le matériau polymère contient au moins 35% en poids de PEO. Avec les mêmes polymères, on obtient un réseau co-continu lorsque le matériau polymère contient au moins 35% en poids de PEO et au moins 35% en poids de PVDF.

La détermination des proportions à respecter pour obtenir soit un réseau continu de polymère solvatant, soit un réseau co-continu de polymère solvatant et de polymère non solvatant est à la portée de l'homme de métier. Pour un couple polymère solvatant P1 - polymère non solvatant P2 donné, on prépare une série de mélanges P1-P2 dont la composition en poids varie par exemple de 10% en 10%. Pour chaque composition, on prépare deux échantillons. L'un des échantillons de chaque composition est placé dans un liquide solvant du polymère solvatant P1 et non solvant du polymère non solvatant P2, et l'autre échantillon de chaque composition est placé dans un liquide solvant du polymère P2 et non solvant du polymère P1. Pour chaque essai de dissolution sélective effectué pour un polymère donné (P1 ou P2), on détermine la proportion de polymère dissoute dans le solvant par rapport à la quantité du polymère présent initialement dans l'échantillon. Cette proportion représente le taux de continuité du polymère donné dans le matériau polymère. Lorsque, pour un échantillon donné, la quantité d'un polymère retrouvée en solution est égale à la quantité de polymère contenue initialement dans l'échantillon, l'on considère que le taux de continuité du polymère est de 100%.

Le sel de lithium peut être choisi parmi LiPF₆, LiAsF₆, LiClO₄, LiBF₄, LiC₄BO₈, Li(C₂F₅SO₂)₂N, Li[(C₂F₅)₃PF₃], LiCF₃SO₃, LiCH₃SO₃, et LiN(SO₂CF₃)₂. LiN(SO₂CF₃)₂, désigné ci-après par LITFSI, est particulièrement préféré.

Bien entendu, la solution solide constituant chacune des couches de l'électrolyte peut contenir des additifs classiquement utilisées dans les électrolytes solides polymères, tels que des charges destinées à renforcer la tenue mécanique. A titre d'exemple, on peut citer MgO, TiO₂, SiO_{2,} BaTiO₃ ou Al₂O₃.

Dans un mode de réalisation particulier de l'invention, le polymère solvatant est un poly(oxyde d'éthylène) POE, le polymère non solvatant est un homopolymère de fluorure de vinylidène (PVDF) ou un copolymère de fluorure de vinylidène et d'hexafluoropropylène (PVDF-HFP), les couches N et P formant l'électrolyte ont la composition suivante :

| Couche N | |
|---|---|
| | % en poids |
| Polymère solvatant : POE | 60-85 |
| Polymère non solvatant (PVDF ou PVDF-HFP) | 0-12 |
| Sel de lithium | 15-25 |
| Additif | 0-15 |

| Couche P | |
|---|---|
| | % en poids |
| Polymère solvatant POE | 35-60 |
| Polymère non solvatant (PVDF ou PVDF-HFP) | 25-60 |
| Sel de lithium | 5-20 |
| Additif | 0-10 |

Les couches N et P sont avantageusement fabriquées par extrusion d'une composition comprenant les constituants appropriés dans les proportions appropriées. La couche N peut être extrudée à l'aide d'une extrudeuse monovis ou d'une extrudeuse bi-vis. La couche P est élaborée de préférence en utilisant une bi-vis, qui permet une meilleure dispersion des différents constituants. Le film bi-couche formant l'électrolyte est obtenu par laminage à chaud des couches N et P.

La batterie qui constitue un autre objet de la présente invention est constituée par un film de matériau composite selon l'invention, placé entre un film constituant l'électrode négative et un film constituant l'électrode positive de sorte que la couche N du film composite soit adjacent à l'électrode négative et la couche P du film composite soit adjacente à l'électrode positive, ladite électrode positive étant au contact d'un collecteur de courant. Dans une telle batterie, la couche N a pour effet d'assurer un bon contact entre l'électrolyte et l'électrode négative, et la couche P a pour effet d'empêcher la croissance des dendrites et d'améliorer la tenue mécanique de l'électrolyte.

Dans les batteries au lithium selon la présente invention, l'épaisseur des films qui constituent les différents éléments de la batterie est en général de l'ordre de 1 à une centaine de micromètres. De préférence, pour le film de matériau composite formant l'électrolyte de la batterie, la couche N a une épaisseur de 1 à 30 µm, la couche P a une épaisseur de 5 à 20 µm.

Dans une batterie selon l'invention, l'électrode négative peut être constituée par du lithium métallique, ou par l'un de ses alliages.

La matière active de l'électrode positive peut être choisie parmi les oxydes de vanadium VOₓ (2 ≤ x ≤ 2,5), LiV₃O₈, Li_{y}Ni₁₋ₓCoₓO₂, (0 ≤ x ≤ 1 ; 0 ≤ y ≤ 1), les spinelles de manganèse Li_{y}Mn₁₋ₓMₓO₂ (M = Cr, Al, V, Ni, 0 ≤ x ≤ 0,5 ; 0 ≤ y ≤ 2), les polydisulfures organiques, FeS, FeS₂, le sulfate de fer Fe₂(SO₄)₃, les phosphates et phosphosilicates de fer et de lithium de structure olivine, ou leurs produits de substitution du fer par le manganèse, utilisés seuls ou en mélanges. Le collecteur de l'électrode positive est de préférence en aluminium, éventuellement revêtu d'une couche carbonée.

### Les exemples

La présente invention est illustrée par les exemples suivants, auxquels elle n'est cependant pas limitée.

### Exemple 1

On a préparé un film de matériau composite ayant la composition suivante :

| Couche N (épaisseur 20 µm) | % en poids |
|---|---|
| POE | 70 |
| PVDF/HFP 85/15 | 2,2 |
| LiTFSI | 17,8 |
| MgO | 10 |

| Couche P (épaisseur 10 µm) | % en poids |
|---|---|
| POE | 36 |
| PVDF/HFP 85/15 | 50 |
| LITFSI | 9 |
| MgO | 5 |

La couche N a été préparée en soumettant un mélange des quantités appropriées de POE, PVDF/HFP, LiTFSI et MgO, à une extrusion dans une extrudeuse monovis munie d'une filière plate. La couche P a été préparée en soumettant un mélange des quantités appropriées de POE, PVDF/HFP, LiTFSI et MgO, à une extrusion dans une extrudeuse bi-vis munie d'une filière plate. Ensuite, les deux couches obtenues ont été assemblées par laminage à chaud, pour former un élément bicouche ayant une épaisseur de 30 µm.

### Exemple 2

On a reproduit le mode opératoire de l'exemple 1 en introduisant dans une extrudeuse monovis, la composition suivante destinée à former la couche N :

| Couche N | % en poids |
|---|---|
| POE | 78 |
| PVDF/HFP 85/15 | 2,5 |
| LiTFSI | 19,5 |

et dans une extrudeuse bi-vis, la composition suivante destinée à former la couche P :

| Couche P | % en poids |
|---|---|
| POE | 40 |
| PVDF/HFP 85/15 | 50 |
| LITFSI | 10 |

Ensuite, on a assemblé les deux couches par laminage à chaud, pour obtenir un matériau dont la couche N a une épaisseur de 20 µm et la couche P une épaisseur de 10 µm pour former un élément bicouche ayant une épaisseur de 30 µm.

### Exemple 3

On a reproduit le mode opératoire de l'exemple 1 en introduisant dans une extrudeuse monovis, la composition suivante destinée à former la couche N :

| Couche N | % en poids |
|---|---|
| POE/PO/AGE | 80 |
| LiTFSI | 20 |

et dans une extrudeuse bi-vis, la composition suivante destinée à former la couche P :

| Couche P | % en poids |
|---|---|
| POE/PO/AGE | 40 |
| PVDF/HFP | 50 |
| LITFSI | 10 |

Ensuite, on a assemblé les deux couches par laminage à chaud, pour obtenir un matériau dont la couche N a une épaisseur de 20 µm et la couche P une épaisseur de 10 µm pour former un élément bicouche ayant une épaisseur de 30 µm.

### Exemple 4

On a préparé une batterie (batterie N+P) contenant le film bicouche de l'exemple 1 comme électrolyte. L'anode est un film de lithium ayant une épaisseur de 100 µm. La cathode est un film de 50 µm d'un matériau composite placé sur un collecteur de courant en aluminium revêtu d'une couche carbonée, ledit matériau composite comprenant LiV₃O₈ comme matière active d'électrode, du noir de carbone comme matériau générant une conductivité électronique, un POE contenant TFSI comme liant.

Le film bicouche de l'exemple 1 a été colaminé avec le film de lithium et le film formant l'électrode.

A titre de comparaison, on a préparé de la même manière deux autres batteries en changeant simplement l'électrolyte. L'une des batterie (batterie N) comprend la couche N comme électrolyte, l'autre batterie (batterie P) comprend la couche P comme électrolyte.

On a fait fonctionner la batterie selon l'invention ainsi que les batteries comparatives, avec un régime de C/2 à la décharge et un régime de C/4 à la charge, en imposant une tension comprise entre 3,3 et 2 V aux bornes, et on a déterminé la durée de vie des batteries. Par durée de vie, on entend le nombre de cycles nécessaires pour qu'une batterie perde 20% de sa capacité initiale.

La durée de vie constatée dans les trois cas est indiqué ci-après :

| | |
|---|---|
| Batterie | Durée de vie |
| N+P | 700 cycles |
| N | 400 cycles |
| P | 50 cycles. |

Il apparaît ainsi que l'utilisation comme électrolyte du film bicouche augmente de manière substantielle la durée de vie de la batterie, notamment par rapport à une batterie classique ayant comme électrolyte une solution solide de sel de lithium dans POE.

### Exemple comparatif

Des essais de cyclage de batteries ayant une anode de lithium ont été effectués en utilisant comme électrolyte un bi-couche ayant une composition selon US-5,925 483.

### Essai n° 1

La 1^{ère} couche est déposée sur une anode de lithium à partir d'une composition contenant 80% de POE et 20% de (CF₃SO₂)NLi (LiTFSI). La 2^{ème} couche est déposée sur la cathode à partir d'une composition contenant 50 % d'un mélange carbonate de propylène (PC) / carbonate d'éthylène (EC) (rapport 1/1), contenant LiTFSI (concentration 1 M) ; 25% de PVDF ; et 25% de POE.

La batterie est assemblée avec la succession suivante de couches : "anode / 1^{ère} couche / 2^{ème} couche / cathode", l'ensemble 1^{ère} et 2^{ème} couches formant l'électrolyte. L'anode est un film de lithium ayant une épaisseur de 100 µm. La cathode est un film de 50 µm d'un matériau composite placé sur un collecteur de courant en aluminium revêtu d'une couche carbonée. Le matériau composite comprend LiV₃O₈ comme matière active d'électrode, du noir de carbone comme matériau générant une conductivité électronique, du PVDF utilisé comme liant, un mélange EC/PC (1/1) et LiTFSI (1 M) apportant la conductivité ionique. L'assemblage de la batterie a été effectué par colaminage du film bicouche avec le film de lithium formant l'anode et le film composite formant la cathode.

On a fait fonctionner la batterie ainsi formée avec un régime de C/2 à la décharge et un régime de C/4 à la charge, en imposant une tension comprise entre 3,3 et 2 V aux bornes, et on a déterminé la durée de vie de la batterie. Par durée de vie, on entend le nombre de cycles nécessaires pour qu'une batterie perde 20% de sa capacité initiale.

La durée de vie constatée dans ce cas est de 60 cycles. Le démontage de la batterie révèle la présence d'une mousse de lithium.

### Essai n° 2

On a reproduit le mode opératoire de l'essai n° 1, mais en remplaçant la 1^{ère} couche de l'essai n° 1 par une couche préparée à partir d'un mélange de LiTFSI, POE, EC et de PC (10/40/25/25). On a assemblé une batterie de la même manière que dans l'exemple 1 et on l'a fait fonctionner dans les conditions de l'exemple 1.

La durée de vie constatée dans cet essai est de 70 cycles, et le démontage de la batterie a également révélé la présence d'une mousse de lithium.

Si l'on compare la durée de vie de ces deux batteries selon l'art antérieur (respectivement 60 et 70 cycles) avec la durée de vie de la batterie réalisée avec l'électrolyte bi-couche décrite dans l'exemple 4 de la présente demande (700 cycles), il apparaît clairement que la différence de composition entre les couches de la présente demande et celles de l'art antérieur (c'est-à-dire l'absence de liquide aprotique dans la présente demande) provoque un effet surprenant, à savoir une amélioration substantielle de la durée de vie, qui est multipliée par 10.

## Revendications

1. Film de matériau composite comprenant une couche dite couche N et une couche dite couche P, **caractérisé en ce que** :
• chacune des couches P et N est constituée par une solution solide d'un sel de lithium dans un matériau polymère, le sel de lithium étant le même dans les deux couches, la teneur en matériau polymère étant d'au moins 60% en poids, et la teneur en sel de lithium étant de 5 à 25% en poids ;
• la couche P contient de 35 à 60% en poids de polymère solvatant choisi parmi les poly(oxyde d'éthylène), de 25 à 60% en poids de polymère non solvatant choisi parmi les poly(fluorure de vinylidène) et les copolymères de fluorure de vinylidène et d'hexafluoropropylène, de 5 à 20% en poids de sel de lithium, et de 0 à 10% en poids d'un additif, le rapport en poids des deux polymères étant tel que le polymère solvatant forme un réseau continu ;
• la couche N contient de 60 à 85% en poids de polymère solvatant choisi parmi les poly(oxyde d'éthylène), de 0 à 12% en poids de polymère non solvatant choisi parmi les poly(fluorure de vinylidène) et les copolymères de fluorure de vinylidène et d'hexafluoropropylène, de 15 à 25% en poids de sel de lithium, et de 0 à 15% en poids d'un additif, le rapport en poids des deux polymères étant tel que le polymère solvatant forme un réseau continu, et le polymère non solvatant ne forme pas un réseau continu.

2. Film de matériau composite selon la revendication 1, **caractérisé en ce que** le sel de lithium est choisi parmi LiPF₆, LiAsF₆, LiClO₄, LiBF₄, LiC₄BO₈, Li(C₂F₅S_{O2})₂N, Li[(C₂F₅)₃PF₃], LiCF₃SO₃, LiCH₃SO₃, et LiN(SO₂CF₃)₂.

3. Film de matériau composite selon la revendication 1, **caractérisé en ce que** la solution solide constituant l'une et/ou l'autre des couches N et P contient un additif.

4. Film de matériau composite selon la revendication 3, **caractérisé en ce que** l'additif est choisi dans le groupe constitué par MgO, TiO₂, SiO_{2,} BaTiO₃ ou Al₂O₃.

5. Film de matériau composite selon la revendication 1, **caractérisé en ce que**, la couche N a une épaisseur de 1 à 30 µm et la couche P a une épaisseur de 5 à 20 µm.

6. Film de matériau composite selon la revendication 1, **caractérisé en ce que** les proportions respectives de polymère solvatant et de polymère non solvatant dans la couche P sont choisies de telle sorte que les deux polymères forment un réseau co-continu.

7. Film de matériau composite selon la revendication 1, **caractérisé en ce que** le polymère solvatant de la couche P est identique à celui de la couche N.

8. Film de matériau composite selon la revendication 1, **caractérisé en ce que** le polymère non solvatant de la couche P est identique à celui de la couche N.

9. Batterie comprenant un film d'électrolyte placé entre une électrode positive et une électrode négative constituée par un film de lithium ou d'un alliage de lithium, **caractérisée en ce que** :
- le film d'électrolyte est un film de matériau composite selon l'une des revendications 1 à 8 ;
- la couche N du film de matériau composite est adjacente à l'électrode négative et la couche P du film de matériau composite est adjacente à l'électrode positive, ladite électrode positive étant au contact d'un collecteur de courant.

10. Procédé de préparation d'un film de matériau composite selon la revendication 1, **caractérisé en ce qu'**on prépare une composition contenant les constituants de la couche P, et une composition contenant les constituants de la couche N, on extrude chacune des compositions pour former les deux couches, puis l'on assemble les deux couches par laminage à chaud.

11. Procédé selon la revendication 10, **caractérisée en ce que** la composition destinée à former la couche P est extrudée à l'aide d'une extrudeuse bi-vis, et la composition destinée à former la couche N est extrudée à l'aide d'une extrudeuse mono-vis ou bis-vis.

## Patentansprüche

1. Folie aus Verbundmaterial, umfassend eine als Schicht N bezeichnete Schicht und eine als Schicht P bezeichnete Schicht, **dadurch gekennzeichnet, dass**:
• jede der Schichten P und N von einer festen Lösung eines Lithiumsalzes in einem Polymermaterial gebildet ist, wobei das Lithiumsalz dasselbe in den zwei Schichten ist, wobei der Gehalt an Polymermaterial mindestens 60 Gew.-% beträgt und der Gehalt an Lithiumsalz 5 bis 25 Gew.-% beträgt,
• die Schicht P 35 bis 60 Gew.-% solvatisierendes Polymer, ausgewählt aus den Polyethylenoxiden, 25 bis 60 Gew.-% nicht solvatisierendes Polymer, ausgewählt aus den Polyvinylidenfluoriden und den Copolymeren von Vinylidenfluorid und von Hexafluoropropylen, 5 bis 20 Gew.-% Lithiumsalz und 0 bis 10 Gew.-% eines Zusatzes enthält, wobei das Gewichtsverhältnis der zwei Polymere derart ist, dass das solvatisierende Polymer ein kontinuierliches Netz bildet,
• die Schicht N 60 bis 85 Gew.-% solvatisierendes Polymer, ausgewählt aus den Polyethylenoxiden, 0 bis 12 Gew.-% nicht solvatisierendes Polymer, ausgewählt aus den Polyvinylidenfluoriden und den Copolymeren von Vinylidenfluorid und von Hexafluoropropylen, 15 bis 25 Gew.-% Lithiumsalz und 0 bis 15 Gew.-% eines Zusatzes enthält, wobei das Gewichtsverhältnis der zwei Polymere derart ist, dass das solvatisierende Polymer ein kontinuierliches Netz bildet und das nicht solvatisierende Polymer kein kontinuierliches Netz bildet.

2. Folie aus Verbundmaterial nach Anspruch 1, **dadurch gekennzeichnet, dass** das Lithiumsalz aus LiPF₆, LiAsF₆, LiClO₄, LiBF₄, LiC₄BO₈, Li(C₂F₅SO₂)₂N, Li[(C₂F₅)₃PF₃], LiCF₃SO₃, LiCH₃SO₃ und LiN(SO₂CF₃)₂ ausgewählt ist.

3. Folie aus Verbundmaterial nach Anspruch 1, **dadurch gekennzeichnet, dass** die feste Lösung, die die eine und/oder die andere der Schichten N und P bildet, einen Zusatz enthält.

4. Folie aus Verbundmaterial nach Anspruch 3, **dadurch gekennzeichnet, dass** der Zusatz aus der Gruppe ausgewählt ist, die von MgO, TiO₂, SiO_{2,} BaTiO₃ oder Al₂O₃ gebildet ist.

5. Folie aus Verbundmaterial nach Anspruch 1, **dadurch gekennzeichnet, dass** die Schicht N eine Stärke von 1 bis 30 µm hat und die Schicht P eine Stärke von 5 bis 20 µm hat.

6. Folie aus Verbundmaterial nach Anspruch 1, **dadurch gekennzeichnet, dass** die jeweiligen Verhältnisse von solvatisierendem Polymer und von nicht solvatisierendem Polymer in der Schicht P derart gewählt sind, dass die zwei Polymere ein co-kontinuierliches Netz bilden.

7. Folie aus Verbundmaterial nach Anspruch 1, **dadurch gekennzeichnet, dass** das solvatisierende Polymer der Schicht P mit dem der Schicht N identisch ist.

8. Folie aus Verbundmaterial nach Anspruch 1, **dadurch gekennzeichnet, dass** das nicht solvatisierende Polymer der Schicht P mit dem der Schicht N identisch ist.

9. Batterie, umfassend eine Elektrolytfolie, platziert zwischen einer positiven Elektrode und einer negativen Elektrode, gebildet von einer Lithiumfolie oder einer Lithiumlegierung, **dadurch gekennzeichnet, dass**:
- die Elektrolytfolie eine Folie aus Verbundmaterial nach einem der Ansprüche 1 bis 8 ist,
- die Schicht N der Folie aus Verbundmaterial an die negative Elektrode angrenzt und die Schicht P der Folie aus Verbundmaterial an die positive Elektrode angrenzt, wobei die positive Elektrode im Kontakt mit einem Stromsammler ist.

10. Verfahren zur Herstellung einer Folie aus Verbundmaterial nach Anspruch 1, **dadurch gekennzeichnet, dass** eine Zusammensetzung hergestellt wird, die die Bestandteile der Schicht P enthält, und eine Zusammensetzung, die die Bestandteile der Schicht N enthält, jede der Zusammensetzungen extrudiert wird, um die zwei Schichten zu bilden, dann die zwei Schichten durch Warmwalzen verbunden werden.

11. Verfahren nach Anspruch 10, **dadurch gekennzeichnet, dass** die Zusammensetzung, die bestimmt ist, die Schicht P zu bilden, mit Hilfe eines Doppelschneckenextruders extrudiert wird, und die Zusammensetzung, die bestimmt ist, die Schicht N zu bilden, mit einem Einfach- oder Doppelschneckenextruder extrudiert wird.

## Claims

1. Film of composite material comprising a layer called layer N and a layer called layer P, **characterized in that**:
• each of layers P and N is composed of a solid solution of a lithium salt in a polymer material, the lithium salt being the same in both layers, the content of polymer material being at least 60 % by weight, and the content of lithium salt being from 5 to 25 % by weight;
• layer P contains from 35 to 60 % by weight of solvating polymer selected from among poly(ethylene oxide)s, from 25 to 60 % by weight of non-solvating polymer selected from among poly(vinylidene fluoride)s and the copolymers of vinylidene fluoride and hexafluoropropylene, from 5 to 20 % by weight of lithium salt and from 0 to 10 % by weight of an additive, the weight ratio of the two polymers being such that the solvating polymer forms a continuous network;
• layer N contains from 60 to 85 % by weight of solvating polymer selected from among poly(ethylene oxide)s, from 0 to 12 % by weight of non-solvating polymer selected from among poly(vinylidene fluoride)s and the copolymers of vinylidene fluoride and hexafluoropropylene, from 15 to 25 % by weight of lithium salt, and from 0 to 15 % by weight of an additive, the weight ratio of the two polymers being such that the solvating polymer forms a continuous network, and the non-solvating polymer does not form a continuous network.

2. The film of composite material according to claim 1, **characterized in that** the lithium salt is selected from among LiPF₆, LiAsF₆, LiClO₄, LiBF₄, LiC₄BO₈, Li(C₂F₅SO₂)₂N, Li[(C₂F₅)₃PF₃], LiCF₃SO₃, LiCH₃SO₃ and LiN(SO₂CF₃)₂.

3. The film of composite material according to claim 1, **characterized in that** the solid solution forming one and/or the other of the layers N and P contains an additive.

4. The film of composite material according to claim 3, **characterized in that** the additive is selected from the group formed by MgO, TiO₂, SiO_{2,} BaTiO₃ or Al₂O₃.

5. The film of composite material according to claim 1, **characterized in that** layer N has a thickness of 1 to 30 µm and layer P has a thickness of 5 to 20 µm.

6. The film of composite material according to claim 1, **characterized in that** the respective proportions of solvating polymer and non-solvating polymer in layer P are selected so that the two polymers form a co-continuous network.

7. The film of composite material according to claim 1, **characterized in that** the solvating polymer of layer P is the same as that of layer N.

8. The film of composite material according to claim 1, **characterized in that** the non-solvating polymer of layer P is the same as that of layer N.

9. Battery comprising an electrolyte film positioned between a positive electrode and a negative electrode formed by a film of lithium or lithium alloy, **characterized in that**:
- the electrolyte film is a film of composite material according to one of claims 1 to 8;
- layer N of the film of composite material is adjacent to the negative electrode and layer P of the film of composite material is adjacent to the positive electrode, said positive electrode being in contact with a current collector.

10. Method for preparing a film of composite material according to claim 1, **characterized in that** a composition containing the constituents of layer P and a composition containing the constituents of layer N are prepared, each of the compositions is extruded to form the two layers, the two layers are then assembled by hot rolling.

11. The method according to claim 10, **characterized in that** the composition intended to form layer P is extruded using a twin-screw extruder, and the composition intended to form layer N is extruded using a single-screw or twin-screw extruder.
